# EUROPÄISCHE PATENTSCHRIFT

(11) **EP 2 915 022 B1**
(45) Veröffentlichungstag und Bekanntmachung des Hinweises auf die Patenterteilung: **22.05.2019**
(21) Anmeldenummer: 13786625.7
(22) Anmeldetag: 18.10.2013
(51) Int. Cl.: G06F 3/01, B60K 35/00, B60K 37/00, G06F 3/03, B60K 37/06

(54) **VERFAHREN ZUM EINGEBEN EINES STEUERBEFEHLS FÜR EINE KOMPONENTE EINES KRAFTWAGENS**
METHOD FOR INPUTTING A CONTROL COMMAND FOR A COMPONENT OF A MOTOR VEHICLE
PROCÉDÉ D'ENTRÉE D'UNE INSTRUCTION DE COMMANDE POUR UN SOUS-ENSEMBLE D'UN VÉHICULE AUTOMOBILE

(30) Priorität: 31.10.2012 DE 102012110460
(43) Veröffentlichungstag der Anmeldung: 09.09.2015
(73) Patentinhaber: Audi AG, 85045 Ingolstadt (DE)
(72) Erfinder: MÜLLER, Ulrich, 85055 Ingolstadt (DE); SCHNEIDER, Johann, 85139 Wettstetten (DE); KÜHNE, Marcus, 85051 Ingolstadt (DE); KÜHNER, Manuel, 85055 Ingolstadt (DE)
(74) Vertreter: Brandt, Kai
(86) Internationale Anmeldenummer: PCT/EP2013/003137
(87) Internationale Veröffentlichungsnummer: WO 2014/067626

(56) Entgegenhaltungen:
- WO-A1-2009/045861
- DE-U1- 20 122 526
- US-A1- 2005 025 345
- US-A1- 2010 295 773
- US-A1- 2010 328 475
- US-A1- 2011 129 124
- US-A1- 2011 237 324
- US-A1- 2012 056 982
- US-A1- 2012 127 128

## Beschreibung

Die Erfindung betrifft ein Verfahren zum Eingeben eines Steuerbefehls für eine Komponenten eines Kraftwagens.

Das Bedienen eines elektronischen Geräts sollte insbesondere in einem Kraftfahrzeug mit einer möglichst geringen Ablenkung des Fahrers vom Fahrgeschehen möglich sein. In diesem Zusammenhang hat sich eine Mensch-Maschine-Interaktion auf der Grundlage einer Gestenerkennung bewährt. Bei dieser wird das Schwenken einer Hand des Benutzers oder eines anderen Eingabeobjekts im Raum von einer Erfassungseinrichtung erkannt und daraus ein entsprechender Steuerbefehl zum Positionieren des Auswahlelements auf einem Bildschirm des elektronischen Geräts generiert.

Aus der DE 201 22 526 ist ein Verfahren bekannt, bei welchem sogenanntes "strukturiertes Licht", beispielsweise in Form eines Fächerstrahls, benutzt wird, um eine virtuelle Eingabevorrichtung zu realisieren. Es ist ferner bekannt, stereoskopische Kameras zu benutzen, um die räumliche Position einer Hand eines Benutzers zu bestimmen und dies zur Gestenerkennung zu nutzen.

In der WO 2009/045861 A1 werden Verfahren zum Ausführen von Spracherkennung unter Verwendung menschlicher Gesten offenbart, umfassend Detektieren einer Geste, Auswählen eines ersten Erkennungssatzes basierend auf der Geste, Empfangen eines Spracheingabesignals und Erkennen des Spracheingabesignals im Kontext des ersten Erkennungssatzes. Insbesondere offenbart die WO 2009 / 045861 A1 ein Verfahren zum Eingeben eines Steuerbefehls für eine Komponente eines Kraftwagens, mit den Schritten: a) Erzeugen einer Bildsequenz eines von einem Benutzer geführten Eingabeobjekts in einem vorgegebenen Erfassungsbereich mittels einer Bildgebungseinrichtung; b) Erkennen einer Lageveränderung des Eingabeobjekts auf Grundlage der Bildsequenz; c) Erzeugen eines Steuerbefehls an die Komponente des Kraftwagens auf Grundlage der erkannten Lageveränderung; wobei die Bildgebungseinrichtung zumindest eine infrarotsensitive Kamera umfasst und der Erfassungsbereich mit zumindest einer Infrarotquelle beleuchtet wird und die Lageveränderung des Eingabeobjekts durch Vergleich von zumindest zwei Bilder der Bildsequenz erkannt wird; wobei dann aus der Bildsequenz Lageinformationen ermittelt werden. In der US 2010/295773 A1 wird ein Verfahren zum Steuern einer elektronischen Vorrichtung offenbart, umfassend Bereitstellen als Teil der elektronischen Vorrichtung eines Anzeigebildschirms zum Anzeigen von Inhalten und eine Erfassungsanordnung umfassend zumindest einen Lichtempfänger und eine Vielzahl von Lichtsendern.

In der US 2011/237324 A1 wird ein Bewegungserfassungssystem offenbart, das eine Tiefenkamera aufweist, in dem Zugriff auf eine elektronische Medienvorrichtung gesteuert wird. Die Altersgruppe einer Person in einem Sichtfeld der Kamera kann bestimmt werden basierend auf Metriken eines 3-D Körpermodells.

In der US 2012/056982 A1 wird ein Tiefenkamerasystem offenbart, das eine strukturierte Lichtbeleuchtung und mehrere Sensoren aufweist. In einem Ansatz, werden Tiefenwerte aus jedem Sensor durch Abgleichen mit dem strukturierten Lichtmuster erhalten. Die Tiefenwerte werden zusammengeführt, um eine finale Tiefenkarte zu erhalten.

In der US 2005/025345 A1 wird eine Nicht-Kontakt-Informationseingabevorrichtung offenbart, die einfach und zuverlässig einfache Bildverarbeitung verwenden kann, um Information einzugeben, die durch die Form der Hand des Benutzers angedeutet wird. Ein Abstandserkennungsabschnitt der Nicht-Kontakt-Informationseingabevorrichtung ist eingerichtet zum Erkennen eines Abstands der Hand zum Bildabschnitt.

In der US 2011/129124 A1 ist ein System, ein Verfahren und eine Schaltung für eine Mensch-Maschine-Schnittstelle offenbart, die ein oder mehrere 3D Handskelettmodelle verwendet.

In der US 2010/328475 A1 sind Systeme und Verfahren offenbart, um Image-Maps zu erstellen. Ein Verfahren enthält die Schritte des Aufnehmens eines ersten Bildes, das durch natürliches Licht beleuchtet wird und Aufnehmen eines zweiten Bildes, das durch Infrarotlicht beleuchtet wird. Ein Tiefenwert kann dann für jeden Pixel unter Verwendung des Verhältnis Intensitäten der entsprechenden Pixel geschätzt werden.

In der US 2012/127128 A1 sind Ausführungsformen offenbart, die sich auf eine Schwebeerkennung in interaktiven Anzeigevorrichtungen beziehen. Eine Ausführungsform stellt eine interaktive Anzeigevorrichtung bereit, die eines Schwebeeingabe basierend auf einem oder mehreren Bildern detektiert. Bekannte Verfahren sind mit dem Nachteil behaftet, eine hohe Rechenleistung zur Auswertung der erfassten Bilder zu benötigen. Marktübliche Vorrichtungen zur Gestenerkennung sind zudem meist für den Einsatz im Heimunterhaltungsbereich konzipiert. Im Gegensatz zu den meisten Heimanwendungen herrschen im Kraftwagen jedoch deutlich komplexere Beleuchtungsverhältnisse, die die Auswertung erfasster Bilder weiter erschweren.

Es ist daher Aufgabe der vorliegenden Erfindung, ein Verfahren bereitzustellen, welches eine einfache und zuverlässige Gestenerkennung im Kraftwagen ermöglicht.

Diese Aufgabe wird durch ein Verfahren mit den Merkmalen des Patentanspruchs 1 und einem Kraftwagen mit den Merkmalen des Anspruchs 7 gelöst. Ein solches Verfahren zum Eingeben eines Steuerbefehls für eine Komponente eines Kraftwagens, umfasst die Schritte:
a) Erzeugen einer Bildsequenz eines von einem Benutzer geführten Eingabeobjekts in einem vorgegebenen Erfassungsbereich mittels einer Bildgebungseinrichtung;
b) Erkennen einer Lageveränderung des Eingabeobjekts auf Grundlage der Bildsequenz;
c) Erzeugen eines Steuerbefehls an die Komponente des Kraftwagens auf Grundlage der erkannten Lageveränderung.

Erfindungsgemäß ist dabei vorgesehen, dass die Bildgebungseinrichtung zumindest eine infrarotsensitive Kamera umfasst und der Erfassungsbereich mit zumindest einer Infrarotquelle beleuchtet wird.

Auf diese Weise kann mit geringem apparativem Aufwand eine einfache und zuverlässige Gestenerkennung realisiert werden. Insbesondere der Verzicht auf stereoskopische Bilderkennung verringert den notwendigen Rechenaufwand, so dass die Bilderkennung in Echtzeit durchgeführt werden kann. Durch die Beleuchtung des Erfassungsbereichs wird gleichzeitig auch unter den schwierigen Beleuchtungsbedingungen im Kraftwagen eine zuverlässige Erkennung ermöglicht. Als Eingabeobjekt kann dabei beispielsweise eine Hand des Benutzers dienen, die Eingabe von Gesten ist jedoch auch durch die Erfassung anderer Objekte möglich. Beispielsweise kann ein Kopfnicken oder Kopfschütteln des Benutzers erkannt werden. Auch körperfremde Objekte, wie beispielsweise ein Eingabestift, können Verwendung finden.

Erfindungsgemäß ist weiterhin vorgesehen, dass die Lageveränderung des Eingabeobjekts durch Anpassen zumindest zweier Bilder der Bildsequenz an ein Skelettmodell des Eingabeobjekts und Vergleich der Parameter des Skelettmodells für die zumindest zwei Bilder erkannt wird.

Die Anpassung an ein solches Skelettmodell ermöglicht eine schnelle Datenreduktion bei der Auswertung der erfassten Bilder, so dass besonders wenig Rechenleistung benötigt wird. Ein solches Skelettmodell kann die Form des Eingabeobjekts durch Parameter beschreiben, welche beispielsweise die Beugewinkel der einzelnen Fingergelenke beschreiben. Indem diese Parameter so lange verändert werden, bis das Skelettmodell dieselbe Form der Hand beschreibt, wie sie in dem Bild erkennbar ist, erhält man einen Satz von Parametern, nämlich z.B. die Beugungswinkel der Fingergelenke, anhand welchem durch einen Computer die Auswertung der relativen Lage des Fingers ermittelt werden kann.

Erfindungsgemäß wird zur Kalibrierung des Skelettmodells für ein spezifisches Eingabeobjekt ein Kalibrierungsbild bei vorgegebener Kalibrierungsposition des Eingabeobjekts im Erfassungsbereich einmalig erfasst, um ein bestimmtes Eingabeobjekt später identifizieren zu können. So kann beispielsweise die Größe einer Hand des Benutzers genau erfasst werden, um später aus dem Verhältnis zwischen tatsächlicher durch die Kalibrierung bekannter Objektgröße und Abbildungsgröße des Eingabeobjekts in der Bildsequenz Lageinformationen zu ermitteln.

Gemäß einem weiteren Aspekt der Erfindung wird die Lage zumindest eines Punktes des Eingabeobjekts in einer Ebene senkrecht zu einer Blickrichtung der zumindest einen Kamera anhand der Koordinaten des erfassten Punktes auf einer Detektormatrix der Kamera bestimmt. Auf diese Weise werden besonders einfach zweidimensionale Positionsinformationen gewonnen, die bereits für sich allein zur Gestenerkennung nutzbar sind.

Um die Lage zumindest eines Punktes des Eingabeobjekts entlang einer Achse parallel zur Blickrichtung der zumindest einen Kamera zu ermitteln, also eine Tiefeninformation zu gewinnen, wird somit anhand eines Bildabstands zumindest zweier Punkte des Eingabeobjekts und dessen Verhältnisses zu einem bekannten Objektabstand der zumindest zwei Punkte die Tiefenlage bestimmt.

Weitere Tiefeninformationen können gewonnen werden, indem die Lage zumindest eines Punktes des Eingabeobjekts entlang der Achse parallel zur Blickrichtung der zumindest einen Kamera anhand einer Lichtstärke des von dem Eingabeobjekt zur Kamera zurückgestreuten Lichtes der Infrarotquelle bestimmt wird. Dies ermöglicht auf einfachste Weise eine genaue Abstandsbestimmung, da die Intensität des von der Infrarotquelle ausgestrahlten Lichts - und damit auch die des rückgestreuten Lichts - quadratisch mit dem Abstand abnimmt. Kleine Abstandsänderungen führen daher schon zu einer beträchtlichen Helligkeitsänderung, so dass eine hohe Messgenauigkeit möglich wird.

Um den wechselnden Lichtverhältnissen und der begrenzten Bandbreite der Kamera gerecht zu werden, ist es dabei zweckmäßig, wenn eine Beleuchtungsleistung der Infrarotquelle zyklisch zwischen zumindest zwei vorgegebenen Leistungswerten variiert wird. Auf diese Weise können Über- oder Unterbelichtungen, die die Abstandsbestimmung beeinträchtigen können, zuverlässig vermieden werden. Die Variation der Beleuchtungsleistung kann dabei auch Intervalle umfassen, in welchen die Infrarotquelle keinerlei Licht abgibt. Da eine solche Taktung der Infrarotquelle nach einem bekannten Muster erfolgt, kann auf diese Weise im Kamerasignal zuverlässig der Lichtanteil der Lichtquelle von umgebungsbedingten Fluktuationen im infraroten Umgebungslicht separiert werden, so dass die Bilderkennung deutlich vereinfacht wird.

Erfindungsgemäß wird zum gleichen Zweck eine Belichtungszeit der zumindest einen Kamera zwischen zumindest zwei vorgegebenen Werten zyklisch variiert. Auch bei starken Kontrasten im Bild können so vollständige Informationen erhalten werden, indem beispielsweise dunkle Bereiche nur in Bildern mit langer Belichtungszeit und helle Bereiche nur in Bildern mit kurzer Belichtungszeit ausgewertet werden.

Da ferner die Geometrie der Fahrgastzelle bekannt ist, kann zur Erkennung der Lage zumindest eines Punktes des Eingabeobjekts ein Lageverhältnis zwischen dem zumindest einen Punkt und einem von der zumindest einen Kamera erfassten fahrzeugfesten Objekt mit bekannter Lage bestimmt werden. Indem das Objekt mit bekannten fahrzeugfesten Objekten in Relation gesetzt wird, werden zusätzliche geometrische Informationen erhalten, die genutzt werden können, um die Genauigkeit der Positionserkennung zu verbessern oder bereits bestimmte Positionen zu validieren.

Die Erfindung betrifft ferner einen Kraftwagen mit einem elektronischen Gerät und einer Gestensteuerungseinrichtung mit einer Bildgebungseinrichtung zum Erfassen einer Lageveränderung eines Eingabeobjekts in einem Fahrgastraum des Kraftwagens, wobei erfindungsgemäß vorgesehen ist, dass die Gestensteuerungseinrichtung dazu ausgelegt ist, ein Verfahren nach einem der vorhergehenden Ansprüche durchzuführen. Die Vorteile ergeben sich aus den anhand des Verfahrens geschilderten Vorteilen.

Im Folgenden werden die Erfindung und ihre Ausführungsformen anhand der Zeichnung näher erläutert. Es zeigen:
- Fig. 1:: eine schematische Darstellung der Erstellung eines Skelettmodells aus einem Eingabeobjekt;
- Fig. 2:: eine schematische Darstellung der Bestimmung der x-y-Position eines Objekts mittels einer Kamera;
- Fig. 3:: eine schematische Darstellung der verbesserten Bestimmung der x-y-Position eines Objekts mittels zweier Kameras;
- Fig. 4:: eine schematische Darstellung der Bestimmung der z-Position eines Objekts anhand einer Abbildungsgröße;
- Fig. 5:: eine schematische Darstellung des Zusammenhangs zwischen der Beleuchtungsstärke und dem Abstand von einer Leuchtquelle;
- Fig. 6:: eine schematische Darstellung der Anpassung der Leuchtintensität an wechselnde Objektabstände;
- Fig. 7:: eine schematische Darstellung der Anpassung der Belichtungszeit einer Kamera an unterschiedliche Lichtverhältnisse.

Bei der Bedienung von Kraftwagenkomponenten, wie beispielsweise Unterhaltungssystemen, Mobiltelefonen, Navigationsgeräten, oder auch elektrischen Fensterhebern, Sitzverstellungen, Klimasystemen und dergleichen, soll die Aufmerksamkeit eines Fahrers des Kraftwagens möglichst wenig von der Fahrbahn abgelenkt werden. Aus diesem Grund soll die Steuerung durch Gestenerkennung erfolgen, da der Fahrer hierbei nicht nach Bedienelementen suchen und dafür gegebenenfalls seine Aufmerksamkeit von der Fahrbahn abwenden muss.

Hierzu wird mit wenigstens einer Infrarotkamera 10 der Innenraum des Kraftwagens um den Fahrer herum aufgezeichnet und dieser Bereich gleichzeitig mit wenigstens einer Infrarotlichtquelle, vorzugsweise im Wellenlängenbereich von 780-870 nm, ausgeleuchtet. Aus der aufgezeichneten Bildsequenz können Veränderungen der Position einer Hand 14 oder eines anderen Eingabeobjekts bestimmt werden, die wiederum bestimmten Steuerbefehlen zugeordnet werden können.

Um den Rechenaufwand bei der Bilderkennung weitestgehend zu reduzieren und eine zuverlässige Echtzeitverarbeitung der Kamerabilder zu ermöglichen, wird hierfür zunächst in einer Kalibrierungsphase ein sogenanntes Skelettmodell 16 der Hand 14 erstellt. Hierfür wird die Hand in einer vorgegebenen Kalibrierungsposition erstmalig aufgenommen, so dass die Basisabmessungen der Hand 14 bestimmt werden können. Das resultierende Skelettmodell 16 ordnet der Hand 14 nun die Position der einzelnen Gelenke 18 sowie der Fingerspitzen 20 zu und umfasst ferner die unveränderlichen Abstände zwischen jeweils verknüpften Punkten.

Später zur Gestenerkennung mit der Kamera 10 erfasste Bilder können nun durch Anpassung des Skelettmodells 16 an die Form der Hand 14 im Bild ausgewertet werden. Hierbei wird der mögliche Bewegungsraum der Hand 14, der durch die jeweiligen Beugewinkelbereiche der Gelenke begrenzt wird, auf eine Konfiguration durchsucht, die sich mit dem Bild der Hand 14 deckt.

Aus Änderungen der Konfiguration der Hand 14 sowie deren Position relativ zur Kamera 10 in Sequenzen aufeinanderfolgender Bilder kann nun eine jeweilige Geste des Benutzers erkannt werden und der entsprechende Steuerbefehl erzeugt werden.

Neben der durch die Beugewinkel der Gelenke 18 definierten Konfiguration der Hand 14 muss also ihre Position bezüglich der Kamera 10 bestimmt werden.

Die Bestimmung der Position der Hand 14 in der x-y-Ebene, also der Ebene senkrecht zur Blickrichtung der Kamera 10, ist dabei besonders einfach. Die Kamera 10 umfasst einen Matrixsensor 22 mit einer Vielzahl von Pixeln 24. Die x-y-Position kann daher einfach aus Position des Bildes 26 der Hand 14 auf dem Matrixsensor 22 ermittelt werden.

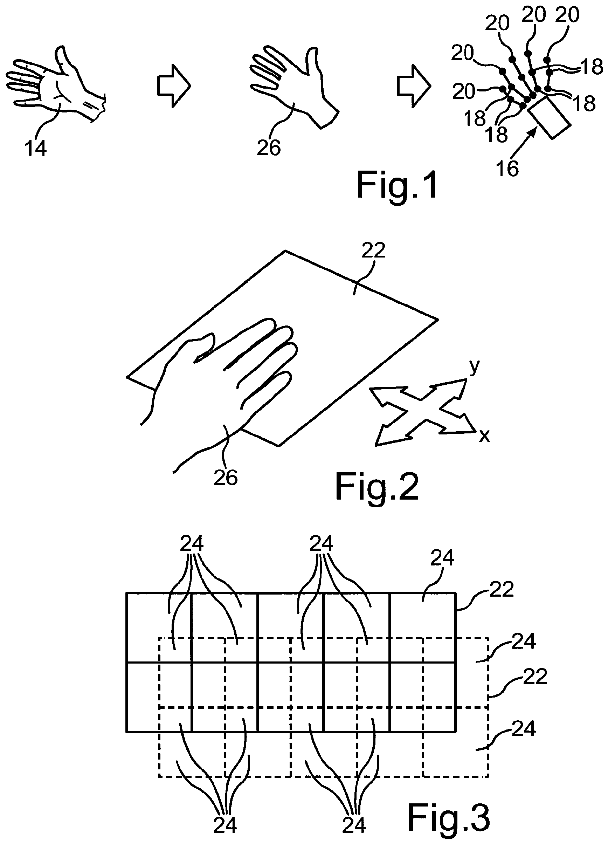

Eine erhöhte Genauigkeit kann dabei erreicht werden, indem zwei Kameras 10 verwendet werden. Die Kameras 10 sind dabei so auszurichten, dass die Pixel 24 der jeweiligen Matrixsensoren 22 nicht genau deckungsgleich sind, sondern einen Versatz gegeneinander aufweisen, wie dies in Fig. 3 dargestellt ist.

Neben der x-y-Position muss jedoch auch die Position der Hand 14 in z-Richtung, also in Blickrichtung der Kamera 10 bestimmt werden. Hierzu existieren mehrere Möglichkeiten.

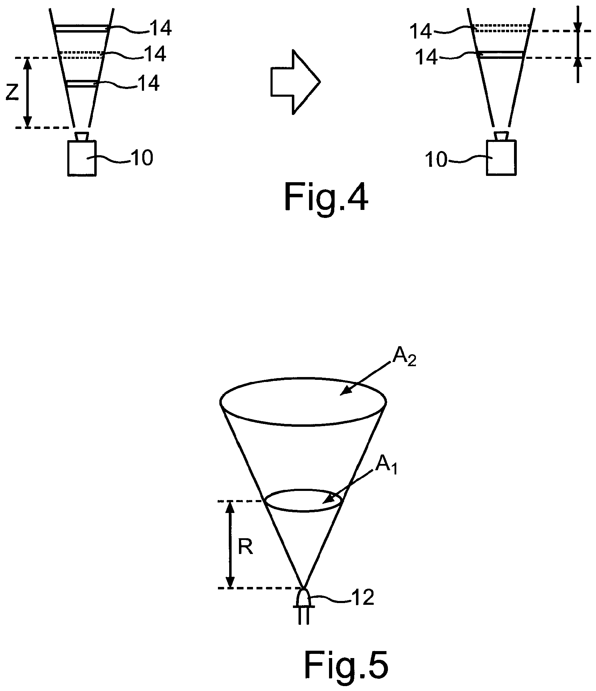

Zunächst kann aus der durch die Kalibrierung bekannten Größe der Hand 14 und der Abbildungsgröße der Hand 14 auf dem Matrixsensor 22 der Kamera 10 auf die Entfernung zwischen Hand 14 und Kamera 10 geschlossen werden. Wie Fig. 4 zeigt, ist die Abbildungsgröße abhängig von Abstand und Größe der Hand zur Kamera 10, so dass beispielsweise eine kleine Hand in geringem Abstand den gleichen Bildwinkel einschließt, wie eine große Hand in größerem Abstand. Auf dieser Grundlage kann eine grobe z-Position mit einer Genauigkeit von etwa ±5 cm ermittelt werden.

Eine verbesserte Genauigkeit wird erreicht, wenn sich die Hand 14 relativ zur z-Achse bewegt. Aus der Änderung der Abbildungsgröße in aufeinanderfolgenden Bildern kann - im Wesentlichen auf Grundlage der zentrischen Streckung - die Abstandsänderung der Hand mit einer Genauigkeit von ±1 cm errechnet werden. Für viele Probleme der Gestenerkennung genügt bereits eine solche Genauigkeit.

Um die z-Position mit höchster Genauigkeit zu bestimmen, kann man sich der Ausbreitungscharakteristik des Lichts der Infrarotquelle 12 bedienen. Die Beleuchtungsstärke, also der Lichtstrom pro Flächeneinheit, ist nämlich umgekehrt proportional zum Quadrat des Abstands von der Infrarotquelle 12. Dies gilt natürlich auch für das von der Hand 14 zur Kamera 10 zurückgestreute oder reflektierte Licht. Daraus folgt, dass bereits geringe Entfernungsänderungen zwischen Hand 14 und Infrarotquelle 12 zu starken Lichtstärkeänderungen im Kamerabild der Hand 14 führen, auf deren Basis die Entfernungsänderung mit einer Genauigkeit von ±0,5 mm bestimmbar ist.

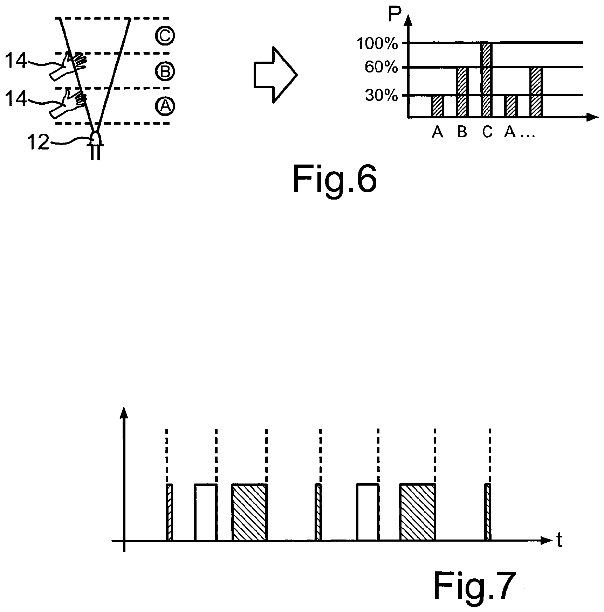

Hierbei ergibt sich jedoch das Problem, dass die Bandbreite der Kamera 10 beschränkt ist. Befindet sich die Hand 14 bei starker Lichtstärke der Infrarotquelle sehr nahe an der Kamera 10, so kann es zu einem Übersteuern der Kamera 10 kommen, so dass keine nützliche Bildauswertung mehr möglich ist. Wie in Fig. 6 veranschaulicht, ist es daher zweckmäßig, die Lichtstärke der Infrarotquelle 12 zyklisch zwischen mehreren vorgegebenen Werten zu variieren. Bilder, bei denen die Kamera übersteuert oder stark unterbelichtet, können dann verworfen werden, so dass immer hinreichend viele gut belichtete Bilder für die Auswertung und Gestenerkennung zur Verfügung stehen. Dies kann ferner durch eine zyklische Variation der Belichtungszeit der Kamera 10 unterstützt werden, wie in Fig. 7 gezeigt. Auf der Längsachse ist dabei die Zeit eingetragen, wobei jeder Balken des Diagramms eine Belichtung der Kamera 10 symbolisiert. Auch hier werden jeweils fehlbelichtete Bilder oder Bildbereiche verworfen.

Neben einer Anpassung an die stark wechselnde Intensität des von der Hand 14 rückgestreuten Lichts ermöglicht dies im Übrigen, Fehlerquellen aufgrund eingestrahlten Umgebungslichts, welches im Kraftwagen stark variieren kann, zu minimieren.

Nachdem nun sowohl die Konfiguration der Hand, als auch deren Position in allen Raumrichtungen erfasst werden kann, können diese Werte für jedes aufgenommene Bild gespeichert werden. Aus der Abfolge von Änderungen dieser Parameter können dann zuverlässig mit bekannten Verfahren der Bildanalyse Gesten des Fahrers erkannt werden.

Alle beschriebenen Analysemethoden können durch die Verwendung mehrerer redundanter Kameras 10 verbessert werden. Dies erlaubt eine Plausibilisierung der von jeder einzelnen Kamera 10 erfassten Werte und gegebenenfalls den Ausschluss unplausibler Aufnahmen oder Auswertungen. Auf diese Art können trotz der im Kraftwagen vorliegenden starken Störeinflüsse Gesten zuverlässig erkannt und zur Steuerung genutzt werden.

## Patentansprüche

1. Verfahren zum Eingeben eines Steuerbefehls für eine Komponente eines Kraftwagens, mit den Schritten:
a) Erzeugen einer Bildsequenz eines von einem Benutzer geführten Eingabeobjekts (14) in einem vorgegebenen Erfassungsbereich mittels einer Bildgebungseinrichtung;
b) Erkennen einer Lageveränderung des Eingabeobjekts (14) auf Grundlage der Bildsequenz;
c) Erzeugen eines Steuerbefehls an die Komponente des Kraftwagens auf Grundlage der erkannten Lageveränderung;
wobei zur Kalibrierung eines Skelettmodells (16) für ein spezifisches Eingabeobjekt ein Kalibrierungsbild bei vorgegebener Position des Eingabeobjekts (14) im Erfassungsbereich einmalig erfasst wird, um ein bestimmtes Eingabeobjekt später erfassen zu können;
wobei die Bildgebungseinrichtung zumindest eine infrarotsensitive Kamera (10) umfasst und der Erfassungsbereich mit zumindest einer Infrarotquelle (12) beleuchtet wird und die Lageveränderung des Eingabeobjekts (14) durch Anpassen zumindest zweier Bilder der Bildsequenz an das Skelettmodell (16) des Eingabeobjekts (14) und Vergleich der Parameter des Skelettmodells (16) für die zumindest zwei Bilder erkannt wird;
wobei dann aus dem Verhältnis zwischen tatsächlicher durch die Kalibrierung bekannter Objektgröße und Abbildungsgröße des Eingabeobjekts in der Bildsequenz Lageinformationen ermittelt werden, und wobei eine Belichtungszeit der zumindest einen Kamera (10) zwischen zumindest zwei vorgegebenen Werten zyklisch variiert wird.

2. Verfahren nach Anspruch 1,
**dadurch gekennzeichnet, dass**
die Lage zumindest eines Punktes des Eingabeobjekts (14) in einer Ebene senkrecht zu einer Blickrichtung der zumindest einen Kamera (10) anhand der Koordinaten des erfassten Punktes auf einer Detektormatrix (22) der Kamera (10) bestimmt wird.

3. Verfahren nach einem der vorhergehenden Ansprüche,
**dadurch gekennzeichnet, dass**
die Lage zumindest eines Punktes des Eingabeobjekts (14) entlang einer Achse parallel zur Blickrichtung der zumindest einen Kamera (10) anhand eines Bildabstands zumindest zweier Punkte des Eingabeobjekts (14) und dessen Verhältnisses zu einem bekannten Objektabstand der zumindest zwei Punkte bestimmt wird.

4. Verfahren nach einem der vorhergehenden Ansprüche,
**dadurch gekennzeichnet, dass**
die Lage zumindest eines Punktes des Eingabeobjekts (14) entlang einer Achse parallel zur Blickrichtung der zumindest einen Kamera (10) anhand einer Lichtstärke des von dem Eingabeobjekt (14) zur Kamera (10) zurückgestreuten Lichtes der Infrarotquelle bestimmt wird.

5. Verfahren nach einem der vorhergehenden Ansprüche,
**dadurch gekennzeichnet, dass**
eine Beleuchtungsleistung der Infrarotquelle (12) zyklisch zwischen zumindest zwei vorgegebenen Leistungswerten variiert wird.

6. Verfahren nach einem der vorhergehenden Ansprüche,
**dadurch gekennzeichnet, dass**
zur Erkennung der Lage zumindest eines Punktes des Eingabeobjekts (14) ein Lageverhältnis zwischen dem zumindest einen Punkt und einem von der zumindest einen Kamera (10) erfassten fahrzeugfesten Objekt mit bekannter Lage bestimmt wird.

7. Kraftwagen mit einem elektronischen Gerät und einer Gestensteuerungseinrichtung mit einer Bildgebungseinrichtung (10) und zumindest einer Infrarotquelle (12) zum Erfassen einer Lageveränderung eines Eingabeobjekts (14) in einem Fahrgastraum des Kraftwagens,
wobei die Gestensteuerungseinrichtung dazu ausgelegt ist, ein Verfahren nach einem der vorhergehenden Ansprüche durchzuführen.

## Claims

1. Method for inputting a control command for a component of a motor vehicle, comprising the steps of:
a) generating an image sequence of an input object (14) guided by a user in a predetermined detection range by means of an imaging device;
b) recognising a change in position of the input object (14) on the basis of the image sequence;
c) generating a control command to the component of the motor vehicle on the basis of the recognised change in position;
wherein in order to calibrate a skeleton model (16) for a specific input object a calibration image at a predetermined position of the input object (14) is detected once in the detection range so as to be able subsequently to detect a specific input object;
wherein the imaging device comprises at least one infrared sensitive camera (10) and the detection region is illuminated with at least one infrared source (12) and the change in position of the input object (14) is recognised by matching at least two images of the images sequence to the skeleton model (16) of the input object (14) and comparing the parameters of the skeleton model (16) for the at least two images;
wherein position information is then determined from the ratio between the actual object size known from the calibration and imaging size of the input object in the image sequence, and wherein an illumination time of the at least one camera (10) is cyclically varied between at least two predetermined values.

2. Method according to claim 1,
**characterised in that**
the position of at least one point of the input object (14) in a plane perpendicular to a viewing direction of the at least one camera (10) is determined with the aid of the coordinates of the detected point on a detector matrix (22) of the camera (10).

3. Method according to any one of the preceding claims,
**characterised in that**
the position of at least one point of the input object (14) along an axis parallel to the viewing direction of the at least one camera (10) is determined with the aid of an image distance of at least two points of the input object (14) and its ratio to a known object distance of the at least two points.

4. Method according to any one of the preceding claims,
**characterised in that**
the position of at least one point of the input object (14) along an axis parallel to the viewing direction of the at least one camera (10) is determined with the aid of a light intensity of the light of the infrared source that is back-scattered from the input object (14) to the camera (10).

5. Method according to any one of the preceding claims,
**characterised in that**
an illumination intensity of the infrared source (12) is cyclically varied between at least two predetermined power values.

6. Method according to any one of the preceding claims,
**characterised in that**
in order to recognise the position of at least one point of the input object (14), a position ratio between the at least one point and a vehicle-fixed object of a known position detected by the at least one camera (10), is determined.

7. Motor vehicle with an electronic device and a gesture control device with an imaging device (10) and at least one infrared source (12) for detecting a change in position of the input object (14) in a passenger compartment of the motor vehicle, wherein the gesture control device is designed to carry out a method according to any one of the preceding claims.

## Revendications

1. Procédé d'entrée d'une instruction de commande pour un sous-ensemble d'un véhicule automobile, avec les étapes :
a) la génération d'une séquence d'images d'un objet d'entrée (14) dirigé par un utilisateur dans une zone d'acquisition prédéfinie au moyen d'un dispositif d'imagerie ;
b) la reconnaissance d'une modification d'orientation de l'objet d'entrée (14) sur la base de la séquence d'images ;
c) la génération d'une instruction de commande pour le sous-ensemble du véhicule automobile sur la base de la modification d'orientation reconnue ;
dans lequel, pour l'étalonnage d'un modèle de squelette (16) pour un objet d'entrée spécifique, une image d'étalonnage à une position prédéfinie de l'objet d'entrée (14) est acquise une fois dans la zone d'acquisition pour pouvoir acquérir plus tard un certain objet d'entrée ;
dans lequel le dispositif d'imagerie comprend au moins une caméra (10) sensible aux infrarouges et la zone d'acquisition est éclairée avec au moins une source infrarouge (12) et la modification d'orientation de l'objet d'entrée (14) est reconnue par adaptation d'au moins deux images de la séquence d'images au modèle de squelette (16) de l'objet d'entrée (14) et par comparaison des paramètres du modèle de squelette (16) pour les au moins deux images ;
dans lequel ensuite, à partir du rapport entre une taille réelle de l'objet connue par l'étalonnage et une taille de reproduction de l'objet d'entrée, des informations d'orientation sont déterminées dans la séquence d'images et dans lequel un temps d'exposition de l'au moins une caméra (10) est varié cycliquement entre au moins deux valeurs prédéfinies.

2. Procédé selon la revendication 1,
**caractérisé en ce que**
l'orientation d'au moins un point de l'objet d'entrée (14) dans un plan perpendiculairement à une direction de visée de l'au moins une caméra (10) est déterminée à l'aide des coordonnées du point acquis sur une matrice de détecteurs (22) de la caméra (10).

3. Procédé selon l'une quelconque des revendications précédentes,
**caractérisé en ce que**
l'orientation d'au moins un point de l'objet d'entrée (14) le long d'un axe parallèlement à la direction de visée de l'au moins une caméra (10) est déterminée à l'aide d'une distance d'image d'au moins deux points de l'objet d'entrée (14) et de son rapport à une distance d'objet connue des au moins deux points.

4. Procédé selon l'une quelconque des revendications précédentes,
**caractérisé en ce que**
l'orientation d'au moins un point de l'objet d'entrée (14) le long d'un axe parallèlement à la direction de visée de l'au moins une caméra (10) est déterminée à l'aide d'une intensité lumineuse de la lumière de la source infrarouge renvoyée par dispersion par l'objet d'entrée (14) vers la caméra (10).

5. Procédé selon l'une quelconque des revendications précédentes,
**caractérisé en ce que**
une puissance d'éclairage de la source infrarouge (12) est variée cycliquement entre au moins deux valeurs de puissance prédéfinies.

6. Procédé selon l'une quelconque des revendications précédentes,
**caractérisé en ce que**
pour la reconnaissance de l'orientation d'au moins un point de l'objet d'entrée (14), il est déterminé un rapport d'orientation entre l'au moins un point et un objet, fixé sur le véhicule, acquis par l'au moins une caméra (10), avec une orientation connue.

7. Véhicule automobile avec un appareil électronique et avec un dispositif de commande par gestes avec un dispositif d'imagerie (10) et au moins une source infrarouge (12) pour l'acquisition d'une modification d'orientation d'un objet d'entrée (14) dans un intérieur du véhicule automobile,
dans lequel le dispositif de commande par gestes est conçu pour exécuter un procédé selon l'une quelconque des revendications précédentes.
